Europäisches Patentamt

(19) European Patent Office

Office européen des brevets

(11) Veröffentlichungsnummer: **0 043 142**
**B1**

(12) **EUROPÄISCHE PATENTSCHRIFT**

(45) Veröffentlichungstag der Patentschrift:
12.12.84

(21) Anmeldenummer: **81105147.3**

(22) Anmeldetag: **02.07.81**

(51) Int. Cl.³: **A 23 P 1/00**, A 23 L 1/216, A 23 L 1/212, B 26 D 3/11

(54) **Bandförmiges Nahrungsmittel, das durch Schneiden aus knollenartigen Gewächsen, wie Kartoffeln, Rüben, Äpfeln oder dergleichen entsteht.**

(30) Priorität: **02.07.80  DE 3025093**

(43) Veröffentlichungstag der Anmeldung:
**06.01.82 Patentblatt 82/1**

(45) Bekanntmachung des Hinweises auf die Patenterteilung:
**12.12.84 Patentblatt 84/50**

(84) Benannte Vertragsstaaten:
**AT BE CH DE FR GB LI NL**

(56) Entgegenhaltungen:
**US - A - 2 415 747**
**US - A - 2 489 581**
**US - A - 2 964 844**
**US - A - 3 202 516**

(73) Patentinhaber: **Müllender, Gernot, Renning Weg 213, D-6973 Boxberg-Schweigern (DE)**

(72) Erfinder: **Müllender, Gernot, Renning Weg 213, D-6973 Boxberg-Schweigern (DE)**

(74) Vertreter: **Bardehle, Heinz, Dipl.-Ing., Patent- und Rechtsanwälte Bardehle-Pagenberg-Dost-Altenburg & Partner Postfach 86 06 20, D-8000 München 86 (DE)**

EP 0 043 142 B1

## Beschreibung

Die Erfindung bezieht sich auf bandförmiges Nahrungsmittel, das durch Schneiden aus knollenartigen Gewächsen, wie Kartoffeln, Rüben, Äpfeln oder dgl. entsteht.

Bekannt sind insbesondere die sogenannten Pommes frites, die durch Zerschneiden von Kartoffeln in langgestreckte Quader entstehen. Eine Abwandlung dieser Gestaltung stellen die sogenannten Kringel-Pommes frites dar, die in ihrer Längserstreckung etwa wellenförmig verlaufen. Aufgrund dieser Gestaltung können sich Behandlungsstoffe, wie z. B. flüssiges Fett zum Ausbacken oder Wasser zum Kochen nur dann schneller auswirken, wenn sie sich nicht während der Behandlung aneinanderlegen.

Der Erfindung liegt die Aufgabe zugrunde, ein bandförmiges Nahrungsmittel der eingangs genannten Art durch Schneiden so zu zerteilen, daß sich eine übersichtlichere Portionierbarkeit ergibt, wobei zusätzlich der Effekt erzielt werden soll, daß Beilagen, z. B. Kräuter, leichter mit dem betreffenden Nahrungsmittel in Verbindung gebracht werden können, als dies bei den langgestreckten Pommes frites der Fall ist. Das erfindungsgemäß gestaltete Nahrungsmittel ist durch ein derart um ein Zentrum gewundenes Band gekennzeichnet, daß die Windungen freitragend einen Zwischenraum voneinander einhalten, der der Gestalt der Windungen entspricht und nach dem Schneidvorgang mindestens ein gleichartiges, herausnehmbares gewundenes Band enthält.

Aufgrund dieser Gestaltung erzielt man gleichzeitig mehrere wünschenswerte Effekte. Zunächst bleibt aufgrund der Gestaltung als gewundenes, freitragendes Band mit Zwischenräumen zwischen den Windungen die schnelle Einwirkungsmöglichkeit von Behandlungsstoffen erhalten. Darüber hinaus eröffnen die zwischen den Windungen liegenden und von diesen umfaßten Zwischenräume die Möglichkeit der Einbringung von Beilagen, wodurch sich für das Servieren des Nahrungsmittels von vornherein ein Verbund ergibt, der insbesondere das Garnieren erleichtert. Das Nahrungsmittel selbst lehnt sich dabei an die ursprüngliche äußere Gestalt des knollenartigen Gewächses an, was dem fertigen Nahrungsmittel eine besondere ästhetische Wirkung verleiht. Es enthält darüber hinaus eine relativ große zusammenhängende Masse des ursprünglichen knollenartigen Gewächses, so daß das portionierte Zuteilen zu einem zusammengestellten Gericht erleichtert wird. Schließlich ist es noch von besonderer Bedeutung, daß bei der Herstellung der notwendigen Zwischenräume zwischen den freitragenden Windungen aus dem Fleisch des ursprünglichen Gewächses ein gleichartiges gewundenes Band herausgeschnitten wird, das mit seinem Herausnehmen die Zwischenräume freigibt und dabei gleichzeitig ein zweites gewundenes Band mit entsprechenden Zwischenräumen bildet. Abgesehen von einem ggfs. notwendigen Schälvorgang entsteht also bei dem vorstehend beschriebenen bandförmigen Schneiden keinerlei Abfall.

Es ist aus der US-A-2 415 747 bekannt, einen Rettich zu einer Wendel mit aneinander anliegenden Windungen zu schneiden, was dann allerdings für die Beigabe eines Behandlungsstoffes, nämlich Salz, es erforderlich macht, die Wendel auseinanderzuziehen. Mit einem derartigen Schneidvorgang lassen sich also die vorstehend im Zusammenhang mit der erfindungsgemäßen Gestaltung herausgestellten Vorteile nicht erzielen.

Eine besonders vorteilhafte Gestaltung des gewundenen Bandes erhält man dadurch, daß die Windungen als Wendel um eine das Zentrum bildende Achse verlaufen. Zweckmäßig läßt sich die Wendel durch gleichförmigen, rotierenden und axialen Vorschub des betreffenden Gewächses in Relativbewegung gegen mindestens eine senkrecht zur Bewegungsachse verlaufende Schneide herstellen. Dabei ergibt sich im Falle nur einer derartigen Schneide automatisch gleichzeitig die den Zwischenraum ausfüllende Wendel aus dem Fleisch des Gewächses, wobei diese letztere Wendel aus der ersteren lediglich herausgeschraubt zu werden braucht, um zwei gleichartige freitragende Wendeln mit den Zwischenräumen zwischen ihren Windungen zu erhalten. Wenn man mehrere Schneiden verwendet, ergeben sich entsprechend mehr Wendeln, was aber dazu führt, daß die Zwischenräume zwischen den Windungen der Wendeln besonders groß werden.

Die Schneide läßt sich als gespannter feststehender oder umlaufender Draht oder Faden ausbilden. In diesem Falle ist durch einen erzwungenen Vorschub dafür zu sorgen, daß sich bei der Rotationsbewegung die notwendige Steigung der Wendel ergibt. Es ist aber auch möglich, die Schneide an einer Stirnkante eine Doppelwendelfläche auszubilden. In diesem Falle verläuft die Schneide im wesentlichen in der gleichen Richtung wie der vorstehend erwähnte Draht oder Faden, wobei aber die hinter der Schneide liegende Doppelwendelfläche aufgrund ihrer Steigung dem Gewächs bei dessen Rotation den Axialvorschub gibt.

Zweckmäßigerweise halbiert oder teilt man das betreffende Gewächs vor dem Wendelschneiden. Das fertige Nahrungsmittel liegt dann besser auf dem Teller.

Eine andere Art der Gestaltung als gewundenes Band besteht darin, die Windungen als Spirale um einen das Zentrum bildenden Festpunkt verlaufen zu lassen. Auch in diesem Falle sind die Zwischenräume zwischen den Windungen nach dem Schneiden zunächst mit dem Fleisch des betreffenden Gewächses ausgefüllt, so daß mindestens eine weitere Spirale entsteht, die der ersteren Spirale entspricht. Auch im Falle einer derartigen Ausbildung ergeben sich die eingangs erwähnten Vorteile.

Das Schneiden der Spirale erfolgt zweckmäßig durch Ausstechen mit einem Stanzmesser, das mindestens zwei ineinander geschachtelte, von dem Festpunkt verlaufende, spiralförmig gestaltete Schneiden enthält. Im Falle der Verwendung nur zweier spiralförmig gestalteter Schneiden entstehen natürlich nur zwei Spiralen aus dem Fleisch des betreffenden Gewächses, die lediglich senkrecht zu ihrer radialen Erstreckung auseinander herausgeschoben werden. Dabei ist es möglich, das betreffende Gewächs entweder vor dem Ausstechen oder danach in Scheiben zu schneiden, wodurch dann Bänder mit entsprechend geringem Querschnitt entstehen.

In den Figuren sind Ausführungsbeispiele der Erfindung dargestellt. Es zeigt

Fig. 1 eine Seitenansicht einer aus einer Kartoffel herausgeschnittenen Wendel,

Fig. 2 eine aus einer vorher halbierten Kartoffel herausgeschnittene Wendel,

Fig. 3 die betreffende Kartoffel unmittelbar nach dem Schneiden mittels einer senkrecht zur Vorschubachse verlaufende Schneide, wobei die eine Wendel noch vollständig die Zwischenräume zwischen der anderen Wendel ausfüllt,

Fig. 4 die beiden Wendel aus Fig. 3, jedoch zur Hälfte auseinander herausgeschraubt,

Fig. 5 die der Fig. 4 entsprechende Lage zweier Wendeln, die aus einer vorher halbierten Kartoffel entstanden sind,

Fig. 6 ein spiralförmig gestochenes Gewächs,

Fig. 7 das gestochene Gewächs gemäß Fig. 6 mit zusätzlichen Scheibenschnitten,

Fig. 8 ein Werkzeug zum Schneiden von Wendeln mit einem gespannten Draht,

Fig. 9 ein Werkzeug zum Schneiden von Wendeln mit einem nach Art einer Doppelwendelfläche verlaufenden Schneidmesser,

Fig. 10 einen Schnitt gemäß der Linie X-X aus Fig. 9.

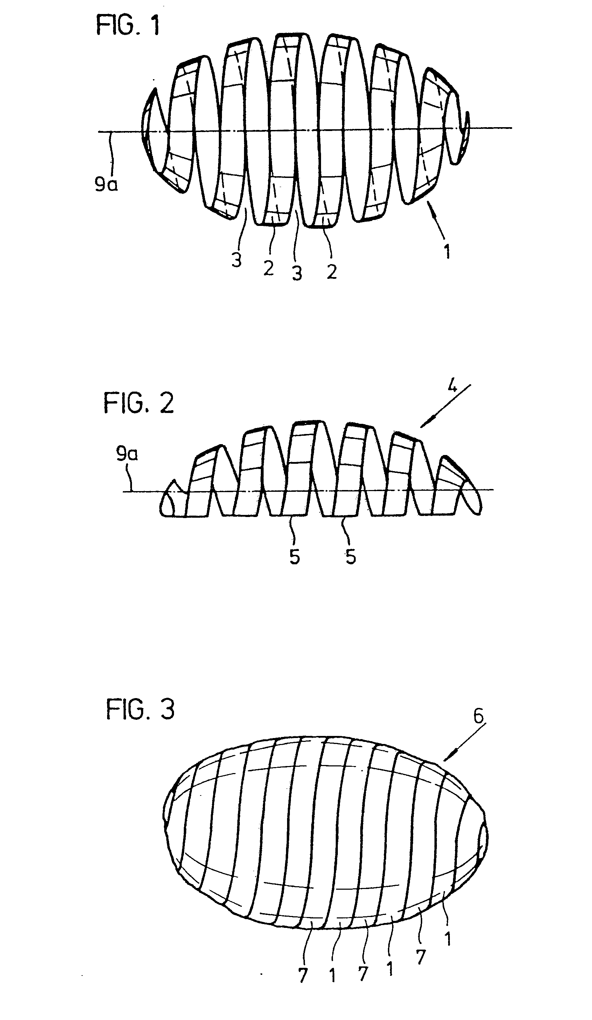

In der Fig. 1 ist das aus einer Kartoffel herausgeschnittene Nahrungsmittel in Form einer Wendel 1 dargestellt, die hinsichtlich ihrer Gestaltung einer an ihren Enden nach innen zusammenlaufenden Schraubenfeder ähnlich ist. Wie ersichtlich, liegen zwischen den Windungen 2 die Zwischenräume 3, die hinsichtlich ihrer Breite den Windungen 2 entsprechen. Die Wendel 1 besteht dabei aus den freitragenden Windungen 2, so daß die Wendel 1 einerseits wegen der guten Zugänglichkeit des Fleisches schnell gekocht oder fritiert werden kann und andererseits in ihrer in der Fig. 1 gezeigten Gestaltung erhalten bleibt, so daß sich auf dem Teller nach wie vor der Eindruck einer Kartoffel ergibt. Dabei können die Zwischenräume 3 leicht durch Beilagen, wie Kräuter oder dergleichen, ausgefüllt werden, die sich in den Zwischenräumen 3 gut halten lassen.

Geht man von einer vor dem Wendelschneiden halbierten Kartoffel aus, so ergibt sich die aus der Fig. 2 ersichtliche Gestaltung einer Wendel 4, die, abgesehen von der vorhergehenden Halbierung sonst weitgehend der Wendel 1 gemäß Fig. 1 entspricht. Die Wendel 4 besitzt lediglich eine durch die Schnittflächen 5 gebildete Auflagefläche, auf der sich die Wendel 4 besonders gut auf einem Teller ablegen läßt.

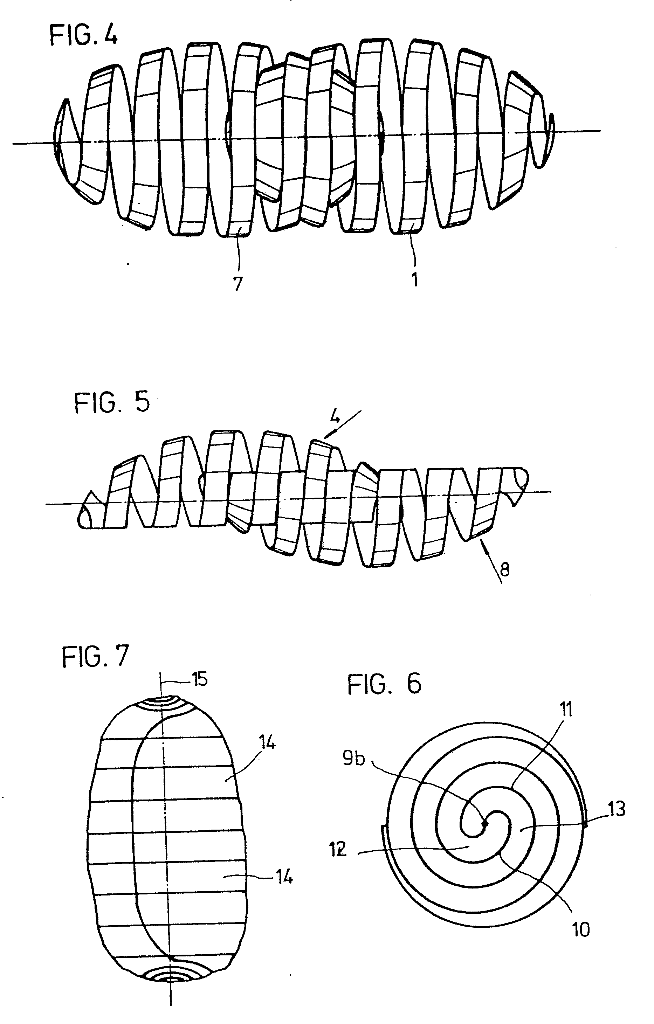

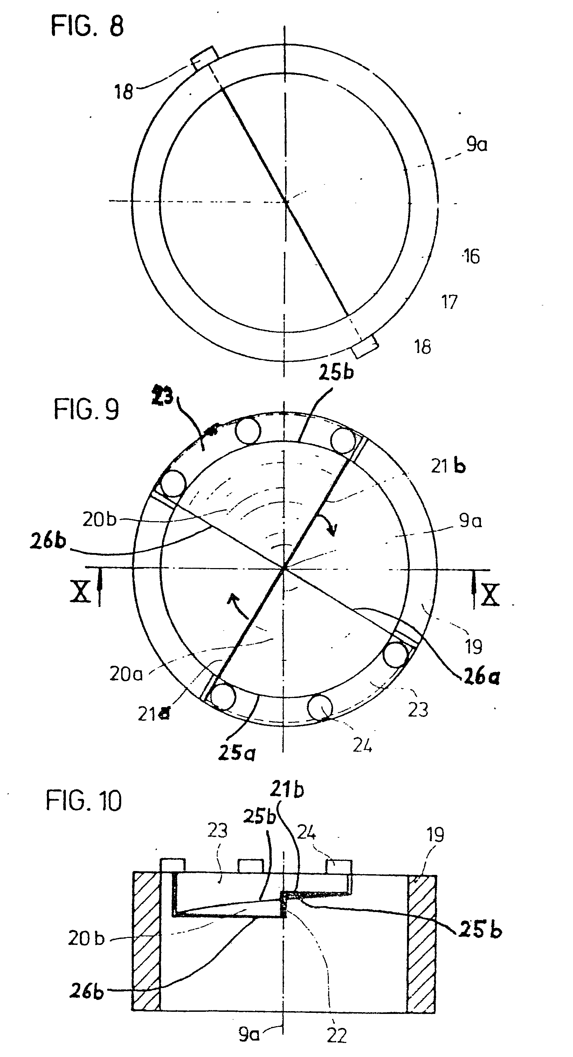

In der Fig. 3 ist eine Kartoffel 6 unmittelbar nach dem Schneiden mittels einer senkrecht zur Bewegungsachse verlaufenden Schneide dargestellt. Dieser Schneidvorgang wird weiter unten im Zusammenhang mit den Fig. 8 bis 10 näher erläutert. Dabei entstehen zwei Wendeln, von denen jede die Zwischenräume der jeweils anderen Wendel ausfüllt. Die eine Wendel 1 entspricht dabei der in Fig. 1 dargestellten Wendel 1. Ihre Zwischenräume werden durch die Windungen der Wendel 7 ausgefüllt. Die beiden Wendeln 1 und 7 lassen sich nun auseinander herausschrauben, wie dies in der Fig. 4 gezeigt ist.

Gemäß Fig. 4 ist die Wendel 1 etwa zur Hälfte aus der Wendel 7 herausgeschraubt. Dabei zeigt die Fig. 4 deutlich, wie bei diesem Herausschrauben eine Wendel die Zwischenräume der anderen Wendel freigibt. Es entstehen schließlich zwei getrennte Wendeln, wie eine solche in der Fig. 1 gezeigt ist.

Ein der Fig. 4 weitgehend entsprechendes Bild ist in der Fig. 5 unter Zugrundelegung der Wendel 4 gemäß Fig. 2 gezeigt. Hier ist aus der Wendel 4 die Wendel 8 etwa zur Hälfte herausgeschraubt, wobei es sich vorher um eine halbierte Kartoffel handelte.

Fig. 6 zeigt eine Kartoffel, aus der zwei Spiralen ausgestochen sind, wobei das Stanzmesser aus zwei in einem Zentrum vereinigten und um dieses spiralförmig gewundenen Messern besteht. Das Zentrum entspricht dem Festpunkt 9b. Dabei entstehen die Schnittlinien 10 und 11, zwischen denen die Spiralen 12 und 13 liegen.

Zusätzlich ist es möglich, eine Kartoffel vor oder nach dem anhand der Fig. 6 beschriebenen Ausstechen in Scheiben zu schneiden, wie dies in der Fig. 7 dargestellt ist. Die hier gezeigte Kartoffel weist die Scheiben 14 auf. Zusammen mit dem Ausstechen gemäß Fig. 6 und den Scheiben 14 ergeben sich dann pro Scheibe 14 jeweils 2 Spiralen 12 und 13, die gemäß der in der Fig. 7 eingezeichneten Richtung der Achse 15 auseinandergeschoben werden können. Die Höhe der Scheiben 14 und die Breite der Spiralen 12 und 13 kann man dabei so gestalten, daß die Spiralen 12 und 13 etwa quadratischen Querschnitt aufweisen. Auch im Falle der Verwendung von Spiralen ergibt sich einerseits die Möglichkeit des Einbringens und Haltens von Beigaben und andererseits eine gute Auflage auf einem Teller.

Es sei nunmehr das Schneiden der anhand der Fig. 1 bis 5 behandelten Wendel erläutert. Fig. 8 zeigt ein einfaches Schneidwerkzeug, bestehend aus dem festen Ring 16, über dessen Mitte der Schneiddraht 17 gespannt ist, der mittels der Klemmelemente 18 in dem Ring 16 gespannt gehalten wird. Unter der Voraussetzung, daß ein ausreichend dünner Draht mit entsprechender Festigkeit verwendet wird, läßt sich mit der Anordnung gemäß Fig. 8 z. B. eine Kartoffel so schneiden, daß sich die beiden in der Fig. 3 dargestellten Wendeln1 und 7 ergeben. Hierzu wird in Relativbewegung eine Kartoffel mit konstantem axialen Vorschub (also senkrecht zur Richtung des Drahtes 17) vorwärts bewegt und gleichzeitig gegenüber dem Draht 17 kontinuierlich gedreht, so daß der Draht 17 in das Fleisch der Kartoffel eindringt und aus dieser die Windungen der beiden Spiralen 1 und 7 gemäß Fig. 3 herausschneidet, wobei jeweils die Windungen der einen Spirale die Zwischenräume der anderen Spirale ausfüllen.

Ein anderes, im Prinzip aber gleich wirkendes Schneidwerkzeug ist in der Fig. 9 dargestellt. Hier ist in dem Ring 19 die Doppelwendelfläche 20a—20b dargestellt, bei der die durch die stark ausgezogene Linie dargestellte Schneide 21a—21b an einer Stirnkante der Doppelwendelfläche 20a—20b ausgebildet ist. Dabei entspricht die Schneide 21a—21b dem Draht 17 aus Fig. 8. Die das Schneidmesser bildende Doppelwendelfläche 20a—20b geht längs der Linie 25a—25b in das Klemmstück 23 über und verläuft mit einer Steigung, die der Steigung der Windungen der auszuschneidenden Wendel entspricht, so daß nach dem Eintritt der Schneide 21a—21b in das Fleisch einer Kartoffel die Steigung der Doppelwendelfläche 20a—20b den weiteren richtigen Vorschub der Kartoffel praktisch erzwingt. Die der Schneidkante 21a—21b abgewandte Kante der Doppelwendelfläche 20a—20b ist mit dem Bezugszeichen 26a bzw. 26b versehen. Die in der Fig. 9 eingezeichneten Pfeile zeigen die Drehrichtung der Schneide 21a—21b gegenüber einer zugeführten Kartoffel an, wobei es sich um eine Relativbewegung handelt. Dies bedeutet, daß die Kartoffel vorgeschoben und/oder gedreht oder das dargestellte Werkzeug vorgeschoben oder gedreht werden kann.

Die Gestaltung des in der Fig. 9 dargestellten Werkzeugs geht auch aus der Fig. 10 hervor, die einen Schnitt längs der Linie X-X aus Fig. 9 zeigt. Wie ersichtlich, wird die Doppelwendelfläche 20a—20b durch ein dünnes Blech gebildet, das im Zentrum des Ringes 19 senkrecht steht und hier den Querschnitt 22 bildet. Dieses Blech verläuft dann entsprechend der Doppelwendelfläche 20a—20b, von der in Fig. 10 lediglich der Teil 20b zu sehen ist. Außerdem ist in der Fig. 10 die Schneide 21b und die Kante 26b gezeigt, soweit diese den Teil 20b der Doppelwendelfläche begrenzt. Schließlich zeigt die Fig. 10 auch die Linie 25b.

Das die Doppelwendelfläche 20a—20b bildende Blech ist im Ring 19 zwischen dem Klemmstück 23 mittels der Schrauben 24 auf einer entsprechenden Ausnehmung im Ring 19 befestigt.

Es sei noch darauf hingewiesen, daß selbstverständlich, wie eingangs auch erwähnt, anstelle von Kartoffeln andere knollenartige Gewächse im Sinne der vorstehenden Darlegungen verarbeitet werden können, wobei sich z. B. im Falle der Verarbeitung von Äpfeln ebenfalls der Vorteil ergibt, daß die Behandlungsstoffe, wie z. B. Zucker oder Teig, schnell und intensiv zur Wirkung kommen können.

**Patentansprüche**

1. Bandförmiges Nahrungsmittel, das durch Schneiden aus knollenartigen Gewächsen, wie Kartoffeln, Rüben, Äpfeln oder dergleichen entsteht, gekennzeichnet durch ein derart um ein Zentrum (9a, 9b) gewundenes Band (1, 7; 12, 13), daß die Windungen (2; 12, 13) freitragend einen Zwischenraum (3) voneinander einhalten, der der Gestalt der Windungen (2; 12, 13) entspricht und der nach dem Schneidvorgang ein gleichartiges, herausnehmbares, gewundenes Band enthält.

2. Nahrungsmittel nach Anspruch 1, dadurch gekennzeichnet, daß die Windungen als Wendel (1, 7) um eine das Zentrum bildende Achse (9a) verlaufen.

3. Nahrungsmittel nach Anspruch 1, dadurch gekennzeichnet, daß die Windungen als Spirale (12, 13) um einen das Zentrum bildenden Festpunkt (9b) verlaufen.

4. Verfahren zum Herstellen eines Nahrungsmittels nach Anspruch 2, dadurch gekennzeichnet, daß die Wendel (1, 7) durch gleichförmigen, rotierenden und axialen Vorschub des betreffenden Gewächses in Relativbewegung gegen mindestens eine senkrecht zur Bewegungsachse verlaufende Schneide (17, 21a—21b) erzeugt wird.

5. Verfahren nach Anspruch 4, dadurch gekennzeichnet, daß das betreffende Gewächs vor dem Schneiden halbiert oder mehrfach geteilt wird.

6. Vorrichtung zur Durchführung des Verfahrens nach Anspruch 4 oder 5, dadurch gekennzeichnet, daß die Schneide durch einen gespannten, feststehenden oder umlaufenden Draht oder Faden (17) gebildet ist, (Fig. 8).

7. Vorrichtung zur Durchführung des Verfahrens nach Anspruch 4 oder 5, dadurch gekennzeichnet, daß die Schneide an einer Stirnkante (21a—21b) einer Doppelwendelfläche (20a—20b) ausgebildet ist, (Fig. 9 und 10).

8. Verfahren zum Herstellen eines Nahrungsmittels nach Anspruch 3, dadurch gekennzeichnet, daß die Spirale (12, 13) durch Ausstechen mit einem Stanzmesser erzeugt wird, daß mindestens zwei ineinander geschachtelte, von einem Zentrum verlaufende, spiralförmig gestaltete Schneiden enthält, (Fig. 6).

9. Verfahren nach Anspruch 8, dadurch gekennzeichnet, daß das betreffende Gewächs in Scheiben (14) geschnitten wird.

**Claims**

1. A ribbon-shaped food which is formed by cutting out of bulbous plants, such as potatoes, beet, apples or the like, characterised by a ribbon (1, 7; 12, 13) wound round a centre (9a, 9b) in such a manner that the turns (2; 12, 13) are self-supporting and have a gap (3) between them which corresponds to the shape of the turns (2; 12, 13) and which, after the cutting operation, contains a corresponding, removable, wound ribbon.

2. A food as claimed in claim 1, characterised in that the turns extend as a helix (1, 7) about an axis (9a) forming the centre.

3. A food as claimed in claim 1, characterised in that the turns extend as spirale (12, 13) about a fixed point (9b) forming the centre.

4. A method of producing a food as claimed in claim 2, characterised in that the helix (1, 7) is produced by uniform, rotating and axial feed of the plant in question in relative movement towards at least one knife edge (17, 21a—21b) extending perpendicular to the axis of movement.

5. A method as claimed in claim 4, characterised in that the plant in question is halved or repeatedly divided before the cutting.

6. An apparatus for carrying out the method as claimed in claim 4 or 5, characterised in that the knife-edge is formed by a tightened, stationary or rotating wire or thread (17) (fig. 8).

7. An apparatus for carrying out the method as claimed in claim 4 or 5, characterised in that the knife-edge is formed on an end edge (21a—21b) of a double helical surface (20a—20b) (fig. 9 and 10).

8. A method of producing a food as claimed in claim 3, characterised in that the spirals (12, 13) are produced by cutting out with a punch knife which contains at least two spiral-shaped knife edges extending from a centre and fitted into one another (fig. 6).

9. A method as claimed in claim 8, characterised in that the plant in question is cut into discs (14).

**Revendications**

1. Aliment en forme de bande, obtenue par découpe d'un végétal comestible en forme de tubercule, tel que des pommes de terre, des carottes ou des pommes, caractérisé par une bande (1), (7), (12), (13) s'enroulant autour d'un centre, dont les spires (2), (12), (13) autoportantes sont séparées l'une de l'autre par un espace (3) de forme correspondant à celle des spires (2), (12), (13) et contenant, après le processus de découpe, une autre bande enroulée similaire à la première et pouvant être dégagée de celle-ci.

2. Aliment en forme de bande selon la revendication 1, caractérisé en ce que les spires se développent à l'instar d'une hélice (1), (7) autour d'un axe (9a) constituant le centre.

3. Aliment en forme de bande selon la revendication 1, caractérisé en ce que les spires se développent à l'instar d'une spirale (12), (13) à partir d'un point fixe (9b) constituant le centre.

4. Procédé de fabrication d'un aliment conforme à la revendication 2, caractérisé en ce que la bande hélcoïdale (1), (7) est obtenue par un avancement régulier, rotatif, axial du végétal en mouvement relatif à l'encontre d'au moins une lame (17), (21a—21b) perpendiculaire à l'axe d'avancement du végétal.

5. Procédé selon la revendication 4, caractérisé en ce que le végétal est divisé en deux ou plusieurs parties avant la découpe.

6. Dispositif pour la mise en oeuvre du procédé conforme à l'une des revendications 4 et 5, caractérisé en ce que la lame est constituée par un fil ou corde (17) tendu, immobile ou rotatif.

7. Dispositif pour la mise en oeuvre du procédé conforme à l'une des revendications 4 et 5, caractérisé en ce que le tranchant est formé sur une arête frontale (21a—21b) d'une surface hélicoïdale double.

8. Procédé de fabrication d'un aliment selon la revendication 3, caractérisé en ce que la spirale (12), (13) est obtenue par enlèvement à l'aide d'un outil de découpe qui se compose d'au moins deux lames s'emboîtant l'une dans l'autre, se développant sous forme de spirales à partir d'un centre.

9. Procédé selon la revendication 8, caractérisé en ce que le végétal considéré est découpé en rondelles (14).

FIG. 1

9a

3  2  3  2

1

FIG. 2

4

9a

5  5

FIG. 3

6

7  1  7  1  7  1

FIG. 4

7    1

FIG. 5

4

8

FIG. 7

15

14

14

FIG. 6

11

9b

12

13

10

FIG. 8

18

9a

16

17

18

25b

FIG. 9

23

21 b

20b

26b

9a

X                    X

19

20a

26a

21a

23

25a

24

FIG. 10

21b

25b

23        25b        24        19

20 b

26b

25 b

9a        22